# EUROPEAN PATENT APPLICATION

(11) **EP 3 578 441 A1**
(43) Date of publication of application: **11.12.2019**
(21) Application number: 19174536.3
(22) Date of filing: 15.05.2019
(51) Int. Cl.: B62D 24/00, B62D 63/02, B62D 63/04

(54) **CONNECTION LAYER SYSTEM, MULTI-PURPOSE AUTONOMOUS DRIVING VEHICLE, CABIN MANAGER, AND POWER DISTRIBUTION METHOD IN CONNECTION LAYER SYSTEM**

(30) Priority: 08.06.2018 JP 2018109952
(71) Applicant: YAZAKI CORPORATION, Minato-ku, Tokyo 108-8333 (JP)
(72) Inventor: FURUYA, Yoshiyuki, Susono-shi, Shizuoka 410-1194 (JP)
(74) Representative: Grünecker Patent- und Rechtsanwälte PartG mbB

(57) **Abstract**

To provide a system suitable for adopting a cabin corresponding to a multi-purpose application. To provide a multi-purpose autonomous driving vehicle in which the system is adopted, and a cabin manager and a power distribution method adopted in the above system. A multi-purpose autonomous driving vehicle 1 adopting a cabin corresponding to a multi-purpose application includes: a chassis layer 4 having a function for traveling; a cabin layer 5 functioning as a cabin 9 on an upper side of the chassis layer 4; and a connection layer 6 disposed between the chassis layer 4 and the cabin layer 5. A system of the connection layer 6 includes a cabin manager 48 disposed between the chassis layer 4 and the cabin layer 5. The cabin manager 48 includes a cabin controller 55 in a configuration thereof, and the cabin controller 55 has a function of changing distribution of a power supply used in the cabin layer 5 according to an application of the cabin layer 5.

## Description

### BACKGROUND OF THE INVENTION

### 1. Field of the Invention

The present invention relates to an invention such as a system suitable for mobility service in an autonomous driving vehicle. The present invention specifically relates to an invention of a system of a connection layer disposed between a chassis layer having a function for traveling and a cabin layer functioning as a cabin on an upper side of the chassis layer. The present invention also relates to an invention of a multi-purpose autonomous driving vehicle including the above layers. The present invention further relates to inventions of a cabin manager and a power distribution method adopted in a connection layer system.

### 2. Description of the Related Art

In recent years, proposals for mobility services have begun to be made in anticipation of the prospect of autonomous driving vehicles. For example, in JP-A-2015-92327 below, a proposal has been made to allocate an autonomous driving vehicle to a person who needs transportation and thus to make the person use the autonomous driving vehicle.

In the future, autonomous driving vehicles are considered to adopt a cabin corresponding to multi-purpose applications as the mobility services change.

### SUMMARY OF THE INVENTION

The present invention has been made in view of the above circumstances, and an object of the present invention is to provide a system suitable for adopting a cabin corresponding to a multi-purpose application. Another object of the present invention is to provide a multi-purpose autonomous driving vehicle in which this system is adopted, and a cabin manager and a power distribution method adopted in the above system.

A connection layer system of the present invention according to an aspect 1 for solving the above problems includes a cabin manager disposed between a chassis layer and a cabin layer, wherein the chassis layer has a function for traveling and the cabin layer functions as a cabin on an upper side of the chassis layer, and wherein the cabin manager includes a controller configured to change distribution of a power supply used in the cabin layer based on a kind of application of the cabin layer.

According to the invention having characteristics of the aspect 1, since the system includes the cabin manager, the cabin manager can change the distribution of the power supply based on the kind of the application of the cabin layer. In other words, since the cabin manager is included, the power supply can be distributed to high priority locations in the cabin layer. Examples of the kind of the application include various applications ranging from ride share, logistics, transportation and retail, to hotels and personal services. Examples also include an application of a multi-purpose autonomous driving vehicle with various purposes changed in one day (an application of a multi-purpose autonomous driving vehicle with various purposes changed in several days or one week, not limited to one day). Other examples include applications in which the cabin is, for example, a rental meeting room, a restaurant, a cafe, a cooking space, a laboratory, a gym, a barber, a convenience store... In the present invention, since the distribution of the power supply can be changed based on the kind of application of the cabin layer 5, for example, the power supply can be changed to a distribution of 40% on a front side and 60% on a rear side of the vehicle based on the kind of application. In addition, the power supply can be changed to a distribution of 100% on the rear side according to another application. Further, the cabin can be monitored sequentially to change the distribution of the power supply according to yet another application. As known from the above, the present invention does not make the distribution of the power supply constant as in the related art. The present invention is suitable in a case of adopting a cabin corresponding to a multi-purpose application with the change of mobility services. That is, the function of the cabin manager is different from the cabin manager in the related art in that the distribution of the power supply can be changed based on the kind of application of the cabin layer.

The invention described in an aspect 2 relates to the connection layer system according to the aspect 1, which further includes a first electrical connection unit connected to the cabin manager and configured to perform electrical connection with the cabin layer.

According to the invention having characteristics of the aspect 2, since the system includes the first electrical connection unit in the configuration thereof, the power supply distributed based on the kind of application of the cabin layer can be supplied to the cabin layer via the first electrical connection unit. Since the first electrical connection unit is included, it is apparently that the electrical connection with the cabin layer can be facilitated. Examples of the configuration of the first electrical connection unit include an electrical connection portion with the cabin layer (for example, the AC outlet in an aspect 4 and/or a connection portion for DC not particularly listed in the aspects) and other configurations used for connection with the cabin manager (for example, an electric wire).

The invention described in an aspect 3 relates to the connection layer system according to the aspect 2, which further includes a customization region configured to change an arrangement of the first electrical connection unit based on the kind of application of the cabin layer.

According to the invention having characteristics of the aspect 3, since the system includes the customization region, the arrangement of the first electrical connection unit (particularly the arrangement of the electrical connection portion with the cabin layer) can have a degree of freedom. Accordingly, the power supply distributed based on the kind of application of the cabin layer can be electrically connected to the cabin layer at an optimum position (the power supply can be supplied). In order to allow the degree of freedom in the arrangement of the electrical connection portion, it is effective to include, for example, a power distribution spool in the configuration of the first electrical connection unit. The power distribution spool is a member capable of drawing the electric wire and unwinding the drawn electric wire, and it is apparently that the electrical connection position can be easily changed with such a member.

The invention described in an aspect 4 relates to the connection layer system according to the aspect 2 or 3, and the first electrical connection unit includes an AC outlet.

According to the invention having characteristics of the aspect 4, the electrical connection portion with the cabin layer can be the AC outlet. Since the present invention enables the supply of the AC power supply, for example, consumer devices (or office devices, information devices, or the like) can be used on a cabin layer side, and the usability can be improved. It is apparently that, in the present invention, an effective electrical connection unit is obtained in the inventions described in aspects 5, 7 and 8 below. The present invention does not exclude the supply of a DC power supply. In addition, the present invention does not exclude the supply by a wireless power supply type.

The invention described in an aspect 5 relates to the connection layer system according to any one of aspects 2 to 4, which further includes a first high voltage battery serving as the power supply, and an inverter connected to the first high voltage battery.

According to the invention having characteristics of the aspect 5, since the system includes the first high voltage battery and the inverter in the configuration thereof, the AC power supply distributed based on the kind of application of the cabin layer can be supplied to the cabin layer via the first electrical connection unit. The present invention is effective in a case of using, for example, consumer devices, office devices, information devices, or the like on the cabin layer side. For example, taking a consumer device as an example, it is effective in a case of using a device having a wide range of power consumption, such as an IH device or a dryer.

The invention described in an aspect 6 relates to the connection layer system according to the aspect 5, and the cabin manager includes, a monitoring unit configured to monitor a capacity state of the first high voltage battery.

According to the invention having characteristics of the aspect 6, since the cabin manager includes the monitoring unit in the configuration thereof, the monitoring unit can be used to monitor the capacity state of the first high voltage battery, and information of the monitoring result can be reflected, for example, in the distribution of the power supply. It is apparently that the present invention is effective in terms of power management.

The invention described in an aspect 7 relates to the connection layer system according to the aspect 5 or 6, which further includes a charging unit configured to charge the first high voltage battery.

According to the invention having characteristics of the aspect 7, since the system includes the charging unit, the connection layer alone can charge the first high voltage battery. It is apparently that the present invention is particularly effective in the inventions described in an aspect 13 below.

The invention described in an aspect 8 relates to the connection layer system according to any one of aspects 2 to 4, which further includes a second electrical connection unit configured to perform electrical connection, and an inverter connected to the second electrical connection unit, and the second electrical connection unit is connected to a second high voltage battery provided on the chassis layer and serving as another power supply.

According to the invention having characteristics of the aspect 8, since the system includes the second electrical connection unit and the inverter connected to the second electrical connection unit, and the second electrical connection unit is connected to the second high voltage battery provided on the chassis layer, the AC power supply distributed based on the kind of application of the cabin layer can be supplied to the cabin layer using the second high voltage battery. The present invention is effective in a case of using, for example, consumer devices, office devices, information devices, or the like on the cabin layer side. The aspect 8 relates to an invention focusing on the utilization of the second high voltage battery, unlike the invention described in the aspect 5.

The invention described in an aspect 9 relates to the connection layer system according to any one of aspects 2 to 4, which further includes a second electrical connection unit configured to perform electrical connection, a first high voltage battery serving as the power supply, and an inverter configured to connect the second electrical connection unit and the first high voltage battery, and the second electrical connection unit is connected to a second high voltage battery provided on the chassis layer and serving as another power supply.

According to the invention having characteristics of the aspect 9, since the system includes the first high voltage battery and the inverter, the second electrical connection unit connected to the inverter is included, and the second electrical connection unit is connected to the second high voltage battery provided on the chassis layer, the AC power supply distributed based on the kind of application of the cabin layer can be supplied to the cabin layer using the first high voltage battery and the second high voltage battery. The present invention is effective in a case of using, for example, consumer devices, office devices, information devices, or the like on the cabin layer side. The aspect 9 relates to an invention focusing on the utilization of the first high voltage battery of the connection layer own and the second high voltage battery.

The invention described in an aspect 10 relates to the connection layer system according to any one of aspects 1 to 9, which further includes a signal relay unit configured to perform signal relay between the chassis layer and the cabin layer.

According to the invention having characteristics of the aspect 10, since the system includes the signal relay unit in the configuration thereof, the traveling speed can be displayed on a display device on the cabin layer side, based on a signal (a signal of a traveling speed or a traveling position) related to, for example, traveling information obtained on a chassis layer side. In addition, an air conditioning system can also be activated on the chassis layer side based on a signal related to temperature information in the cabin obtained on the cabin layer side. Examples of the signal related to other information include a signal of measured values obtained by various sensors on the cabin layer side, a signal at a switch operation to notify an emergency, a signal indicating an emergency coming from outside, and a signal related to communication including the Internet.

The invention described in an aspect 11 relates to the connection layer system according to any one of aspects 1 to 10, which further includes at least one of a shield unit as a noise countermeasure disposed between the chassis layer and the cabin layer, a waterproof unit as a water countermeasure disposed between the chassis layer and the cabin layer, a heat-resistant unit as a heat countermeasure disposed between the chassis layer and the cabin layer, and a structure fixing unit capable of fixing a structure used in the cabin layer.

According to the invention having characteristics of the aspect 11, since the system includes the shield unit, the waterproof unit, the heat-resistant unit and the structure fixing unit in the configuration thereof, the noise countermeasure can be achieved in the case of the shield unit, the water countermeasure can be achieved in the case of the waterproof unit, the heat countermeasure can be achieved in the case of the heat-resistant unit, and fixation of the structure can be achieved in the case of the structure fixing unit.

A multi-purpose autonomous driving vehicle of the present invention according to an aspect 12 for solving the above problems includes: a chassis layer having a function for traveling; a cabin layer functioning as a cabin on an upper side of the chassis layer; and a connection layer disposed between the chassis layer and the cabin layer, and the connection layer system according to any one of aspects 1 to 11 is adopted as a system in the connection layer.

According to the invention having characteristics of the aspect 12, since the connection layer system is adopted, an autonomous driving vehicle corresponding to a multi-purpose application can be provided.

The invention described in an aspect 13 relates to the multi-purpose autonomous driving vehicle according to the aspect 12, and the connection layer is separate from the chassis layer and the cabin layer.

According to the invention having characteristics of the aspect 13, the connection layer can be separate from the chassis layer and the cabin layer. According to the present invention, one form of the connection layer in the multi-purpose autonomous driving vehicle can be provided.

The invention described in an aspect 14 relates to the multi-purpose autonomous driving vehicle according to the aspect 12, and the connection layer is integrated with either one of the chassis layer and the cabin layer.

According to the invention having characteristics of the aspect 14, the connection layer can be integrated with either one of the chassis layer and the cabin layer. According to the present invention, one form of the connection layer in the multi-purpose autonomous driving vehicle can be provided.

A cabin manager of the present invention according to an aspect 15 for solving the above problems includes a controller configured to change distribution of a power supply used in a cabin layer based on a type of application of the cabin layer, wherein the controller is disposed on a connection layer provided between a chassis layer having a function for traveling and the cabin layer functioning as a cabin on an upper side of the chassis layer.

According to the invention having characteristics of the aspect 15, the distribution of the power supply can be changed based on the kind of application of the cabin layer. In other words, the power supply can be distributed to high priority locations in the cabin layer. Examples of the application include those mentioned in the description for the aspect 1, for example. The present invention does not make the distribution of the power supply constant. The present invention is suitable in a case of adopting a cabin corresponding to a multi-purpose application with the change of mobility services. That is, the distribution of the power supply can be changed based on the kind of application of the cabin layer.

A power distribution method in a connection layer system of the present invention according to an aspect 16 for solving the above problems includes performing a process of changing distribution of a power supply by a controller based on a kind of application of a cabin layer, wherein the connection layer system includes a cabin manager disposed on a connection layer disposed between a chassis layer having a function for traveling and the cabin layer functioning as a cabin on an upper side of the chassis layer, and the cabin manager includes the controller configured to distribute the power supply used in the cabin layer.

According to the invention having characteristics of the aspect 16, the distribution of the power supply can be changed based on the kind of application of the cabin layer by adopting the method of the present invention. In other words, the power supply can be distributed to high priority locations in the cabin layer. Examples of the application include those mentioned in the description for the aspect 1. The present invention is not a method of making the distribution of the power supply constant. The present invention is a method suitable in a case of adopting a cabin corresponding to a multi-purpose application with the change of mobility services. That is, it is a method in which the distribution of the power supply can be changed based on the kind of application of the cabin layer.

According to the present invention, the effect of being able to adopt a cabin corresponding to a multi-purpose application is obtained.

### BRIEF DESCRIPTION OF DRAWINGS

Fig. 1 is a schematic diagram showing an embodiment of multi-purpose autonomous driving vehicles according to the present invention.
Figs. 2A and 2B are diagrams exemplifying one of the multi-purpose autonomous driving vehicles of Fig. 1, in which Fig. 2A is a diagram illustrating an application of a cabin layer, and Fig. 2B is a configuration diagram of the multi-purpose autonomous driving vehicle of Fig. 2A.
Figs. 3A and 3B are diagrams in which the application of the cabin layer is changed as compared with Figs. 2A and 2B, in which Fig. 3A is a diagram illustrating the application, and Fig. 3B is a configuration diagram of the multi-purpose autonomous driving vehicle of Fig. 3A.
Fig. 4 is a schematic diagram showing an example in the cabin of Fig. 3A.
Fig. 5 is a schematic diagram showing another example in the cabin.
Fig. 6 is a configuration diagram of a chassis layer.
Fig. 7 is a configuration diagram of a connection layer.
Fig. 8 is a configuration diagram of a cabin manager.
Fig. 9 is a configuration diagram of an electrical connection unit.
Fig. 10 is a configuration diagram of the connection layer as viewed in a cross section thereof.
Fig. 11 is a configuration diagram of an electrical connection unit.
Fig. 12 is a configuration diagram of the connection layer as viewed in a cross section thereof.
Figs. 13A to 13C are schematic diagrams showing other examples of an electrical connection portion.
Figs. 14A to 14C are diagrams supplementally illustrating the multi-purpose autonomous driving vehicle.

### DETAILED DESCRIPTION OF THE EXEMPLARY EMBODIMENTS

A multi-purpose autonomous driving vehicle adopting a cabin corresponding to a multi-purpose application includes: a chassis layer having a function for traveling; a cabin layer functioning as a cabin on an upper side of the chassis layer; and a connection layer disposed between the chassis layer and the cabin layer. A system of the connection layer includes a cabin manager disposed between the chassis layer and the cabin layer. The cabin manager includes a controller in a configuration thereof, and the controller has a function of changing distribution of a power supply used in the cabin layer according to an application of the cabin layer.

### [Embodiment]

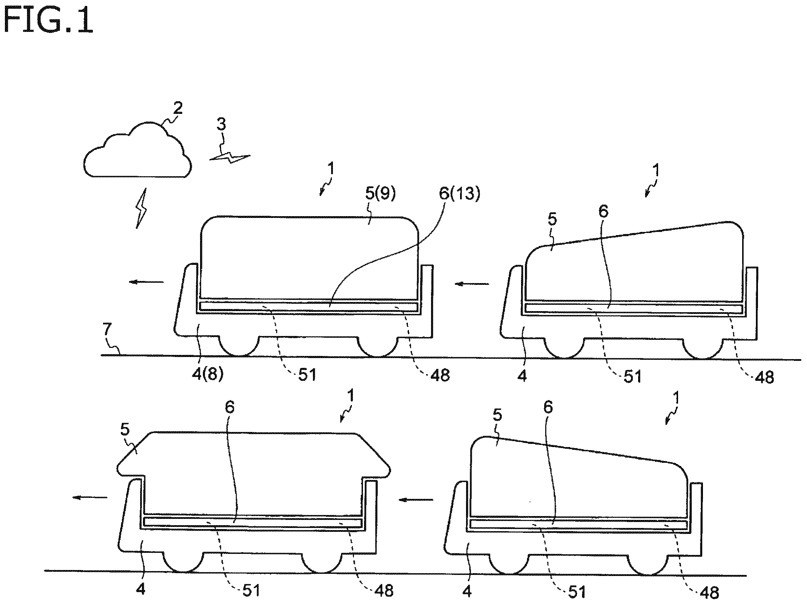

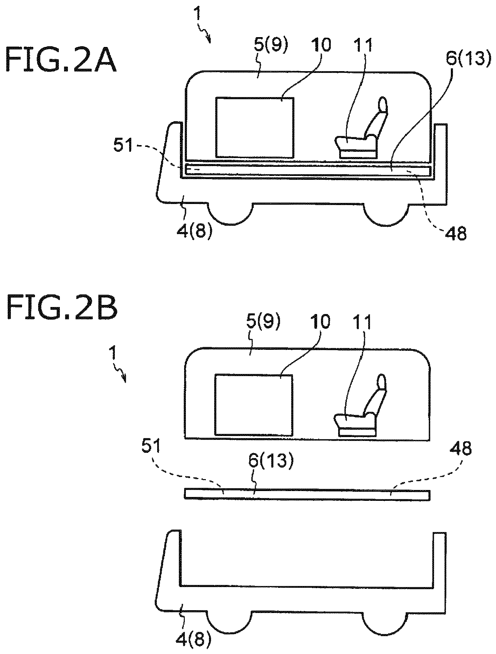

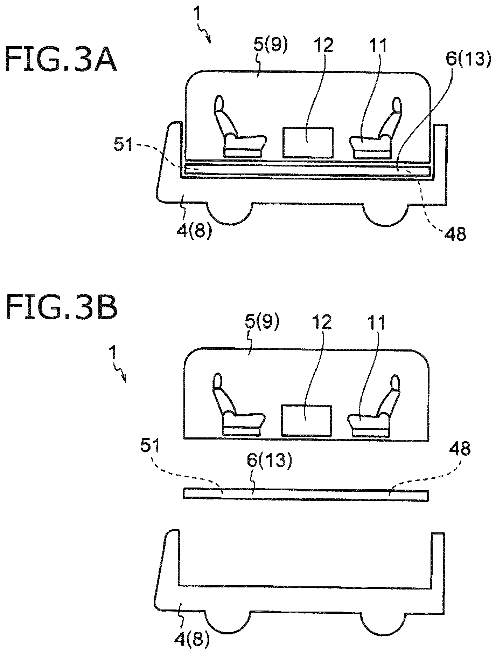

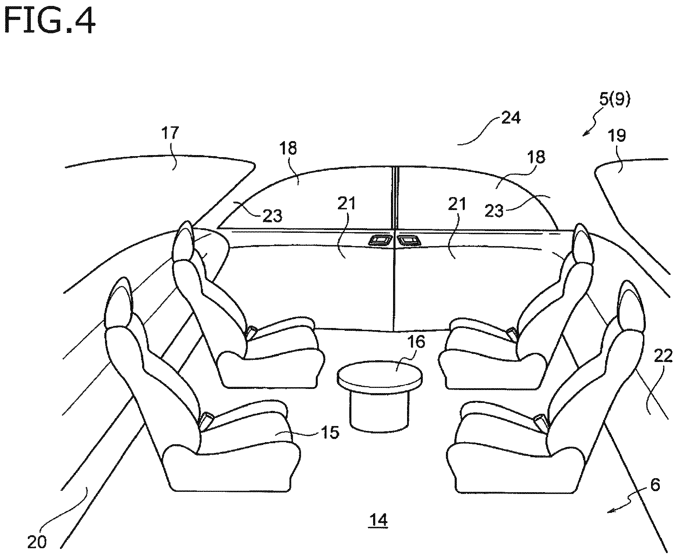

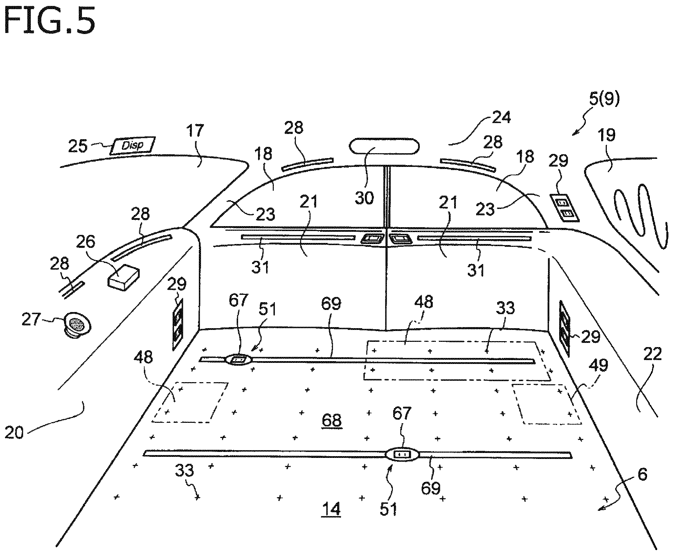

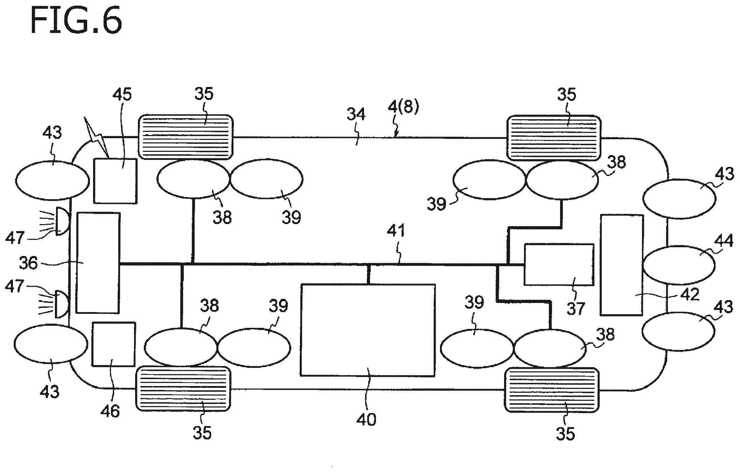

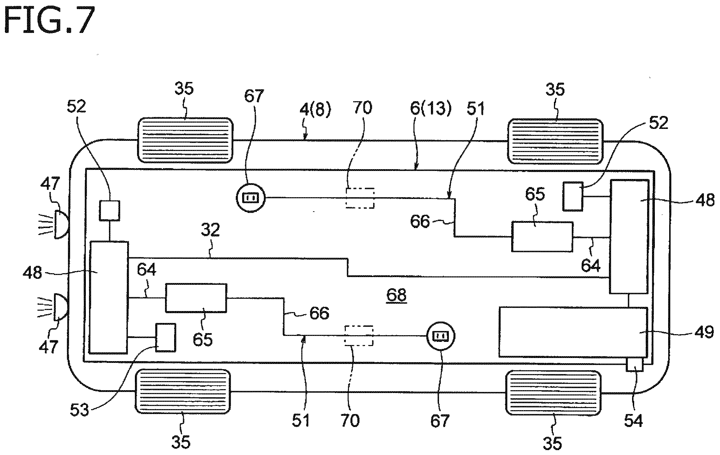

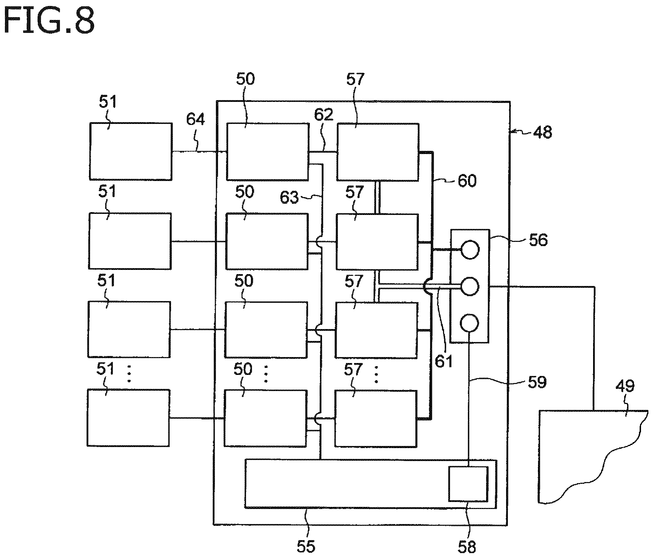

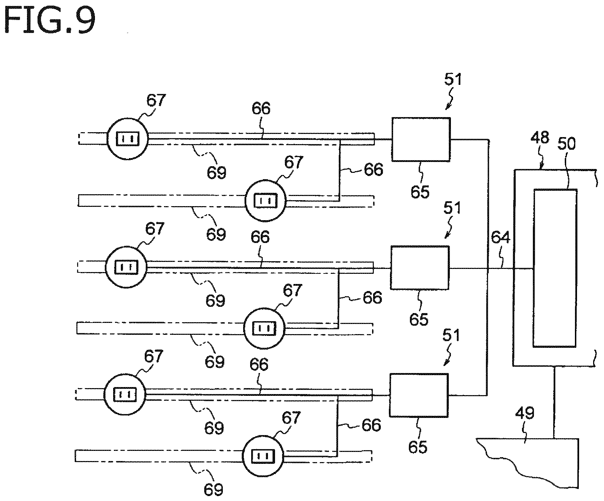

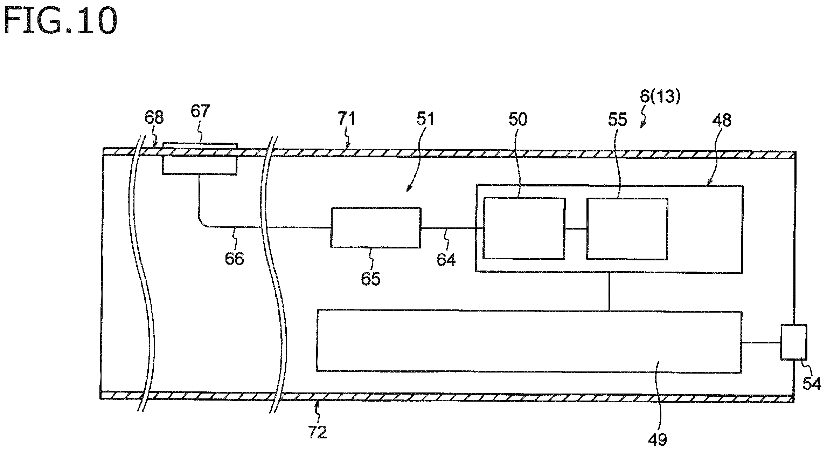

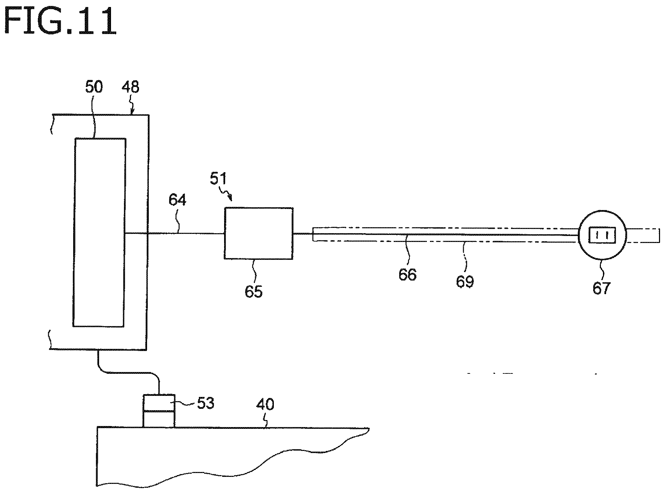

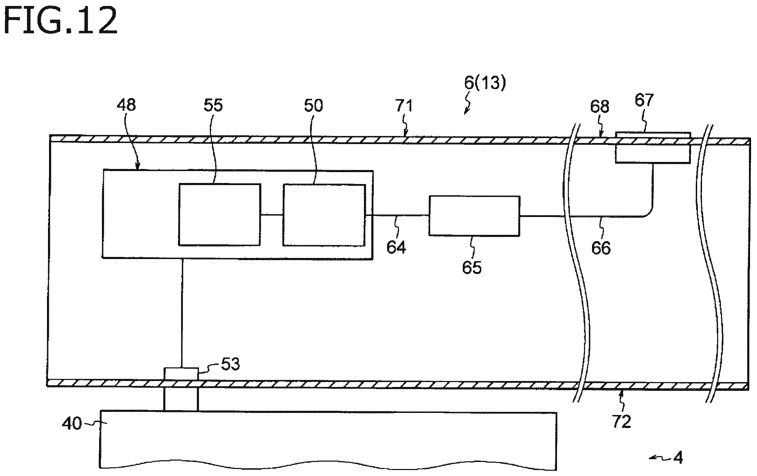

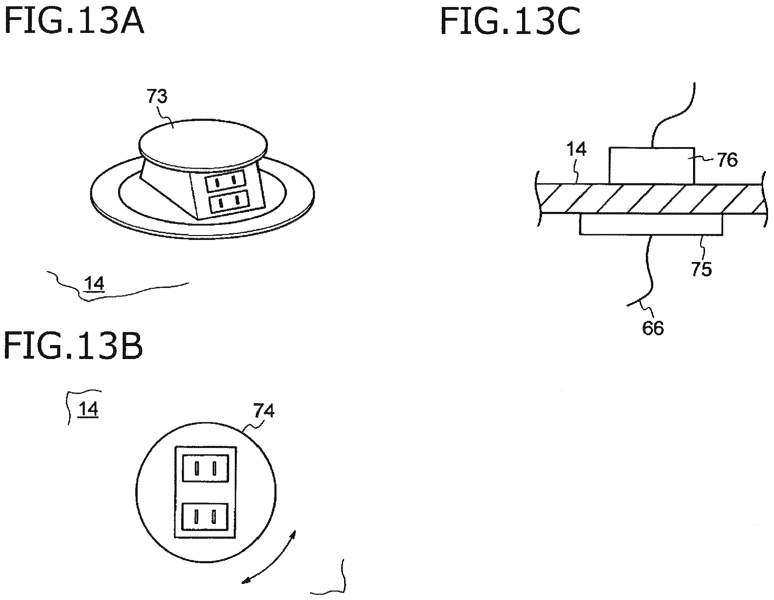

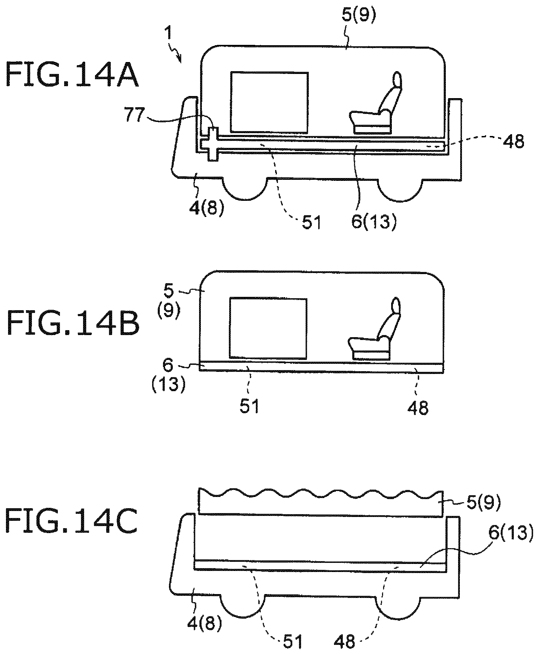

Hereinafter, an embodiment will be described with reference to the drawings. Fig. 1 is a schematic diagram showing an embodiment of multi-purpose autonomous driving vehicles according to the present invention. Figs. 2A and 2B are diagrams exemplifying one of the multi-purpose autonomous driving vehicles of Fig. 1. Figs. 3A and 3B are diagrams in which the application of the cabin layer is changed as compared with Figs. 2A and 2B. Fig. 4 is a schematic diagram showing an example in the cabin of Fig. 3A. Fig. 5 is a schematic diagram showing another example in the cabin. Fig. 6 is a configuration diagram of the chassis layer. Fig. 7 is a configuration diagram of the connection layer. Fig. 8 is a configuration diagram of the cabin manager. Fig. 9 and Fig. 11 are configuration diagrams of electrical connection units. Fig. 10 and Fig. 12 are configuration diagrams of the connection layer as viewed in a cross section thereof. Figs. 13A to 13C are schematic diagrams showing other examples of an electrical connection portion. Figs. 14A to 14C are diagrams supplementally illustrating the multi-purpose autonomous driving vehicle.

In the following description, shapes, materials, numerical values, directions or the like are examples for facilitating the understanding of the present invention, and can be can be changed as appropriate based on the kind of application, purpose, specification, or the like.

### <Multi-purpose Autonomous Driving Vehicle 1>

In Fig. 1, reference numeral 1 denotes the multi-purpose autonomous driving vehicle according to the present invention. Fig. 1 shows four multi-purpose autonomous driving vehicles 1, and an outer shape thereof is changed according to an application of a cabin layer 5 to be described later. The four multi-purpose autonomous driving vehicles 1 of Fig. 1 are assumed to have an application as an example of many applications. Hereinafter, one of the four outer shapes will be described as a representative example.

In Fig. 1 to Fig. 3B, the multi-purpose autonomous driving vehicle 1 is an autonomous driving vehicle whose traveling is controlled by a wireless 3 using a cloud 2 (cloud service), and includes a portion to be a platform, a portion corresponding to a multi-purpose application, and a portion connecting the above portions. A fully autonomous driving vehicle corresponding to a Level 4 (Lv 4) ride share exclusive vehicle is used as the above autonomous driving vehicle in the present embodiment (which is not limited thereto). The multi-purpose autonomous driving vehicle 1 is configured such that the portion to be a platform, the portion corresponding to a multi-purpose application, and the connecting portion are stratified. Specifically, the multi-purpose autonomous driving vehicle 1 includes a chassis layer 4, a cabin layer 5 and a connection layer 6. The chassis layer 4 corresponds to the portion to be a platform. The cabin layer 5 corresponds to the portion corresponding to a multi-purpose application. The connection layer 6 corresponds to the connecting portion. The chassis layer 4 corresponds to a "lower" layer portion among "upper, middle and lower" layer portions. The cabin layer 5 corresponds to an "upper" layer portion. The connection layer 6 corresponds to a "middle" later portion. Reference numeral 7 in Fig. 1 denotes the ground (traveling surface). In addition, arrows in Fig. 1 indicate a forward direction.

### <Summary of Chassis Layer 4>

In Fig. 1 to Fig. 3B, the chassis layer 4 has a function for traveling by autonomous driving. In other words, the chassis layer 4 has a function of "travel, turn, stop" autonomously. The chassis layer 4 is a portion of traveling infrastructure. The chassis layer 4 is a common portion as can be seen from the four multi-purpose autonomous driving vehicles 1 of Fig. 1. Even if the chassis layer 4 is a common portion, it may be divided according to sizes, such as a known mini vehicle size, an ordinary vehicle size, and a cargo vehicle size.

The chassis layer 4 is the "chassis layer" described in the claims, but may be replaced by a "chassis 8" simply. Alternatively, the chassis layer 4 may be read as "platform" or "autonomous traveling unit" not particularly having a reference numeral.

### <Summary of Cabin Layer 5>

In Fig. 1 to Fig. 3B, the cabin layer 5 is a portion functioning as a cabin 9 on an upper side of the chassis layer 4 (the chassis 8). The cabin layer 5 is configured such that the cabin 9 can cope with a multi-purpose application. In Figs. 2A and 2B, a structure 10 and a seat 11 are fixed in the cabin 9, and in Fig. 3A and 3B, two seats 11 are fixed in the cabin 9. In addition, in Figs. 3A and 3B, a structure 12 is fixed between the two seats 11. The multi-purpose autonomous driving vehicle 1 is autonomously distributed to the user in the absence of anything in the cabin 9. Then, the user can fix his/her own structure or simply to place personal items such as luggage in the cabin 9. The cabin layer 5 is understood to be a space for the user to "spend time" in the case of the application of Figs. 2A and 2B or Figs. 3A and 3B.

The cabin layer 5 is the "cabin layer" described in the claims, but may be expressed as the cabin 9. Alternatively, the cabin layer 5 may be read as a "free space unit" or "service providing unit" not particularly having a reference numeral, for the user.

### <Multi-purpose Application>

Here, examples of the multi-purpose "application" will be given. Examples of the application include various applications ranging from ride share, logistics, transportation and retail, to hotels and personal services. Examples also include an application of a multi-purpose autonomous driving vehicle with various purposes changed in one day (an application of a multi-purpose autonomous driving vehicle with various purposes changed in several days or one week, not limited to one day). Other examples include applications in which the cabin 9 is, for example, a rental meeting room, a restaurant, a cafe, a cooking space, a laboratory, a gym, a barber, a convenience store... From the above applications, it can be seen that the amount of a power supply needed in the cabin layer 5 varies. Therefore, the present invention is useful.

### <Summary of Connection Layer 6>

In Fig. 1 to Fig. 3B, the connection layer 6 is a portion disposed between the chassis layer 4 (chassis 8) and the cabin layer 5 (cabin 9) and can connect the chassis layer 4 and the cabin layer 5. In addition, the connection layer 6 is configured to be able to prevent an influence (for example, influence of noise to be described later) of the chassis layer 4 on the cabin layer 5 or an influence (for example, influence of water to be described later) of the cabin layer 5 on the chassis layer 4. Further, the connection layer 6 is configured to be able to change the distribution of the power supply used in the cabin layer 5 based on the kind of application of the cabin layer 5, as will be understood from the following description. The connection layer 6 is a "connecting" infrastructure portion. In addition, the connection layer 6 is a partition portion for shielding the influence from the bottom to the top or the influence from the top to the bottom (the partition portion can also be a portion of ensuring safety). Further, the connection layer 6 is a portion capable of changing the distribution of the power supply. The connection layer 6 is a portion separately disposed between the chassis layer 4 and the cabin layer 5 (Separate disposition is an example, which will be described later with reference to Figs. 14A to 14C).

The connection layer 6 is the "connection layer" described in the claims, but may be replaced by, for example, a "plate module 13" simply. Alternatively, the connection layer 6 may be read as a "connection module" or the like not particularly having a reference numeral.

### <Example of Cabin 9>

In Fig. 4, the cabin 9 is configured as a space where four users (not shown) can relax and spend time. The portion of reference numeral 14 which can be seen in Fig. 4 shows the floor configuring the connection layer 6. The floor 14 is formed to be flat. On the floor 14, four seats 15 are fixed as an example of the application of the cabin layer 5. The four seats 15 are fixed in a state where four users can sit facing each other by placing a small table 16 at the center. The four sheets 15 and the table 16 are fixed or placed on the floor 14 in advance according to the number of users and requests of the service provider (not shown) (this fixing is detachable fixing, but shall be fixing which can ensure the safety of the user during traveling).

In Fig. 4, as portions pertaining to the configuration of the cabin layer 5, reference numeral 17 denotes a windshield, reference numeral 18 denotes a side glass, reference numeral 19 denotes a rear glass, reference numeral 20 denotes a front panel, reference numeral 21 denotes a side panel, reference numeral 22 denotes a rear panel, reference numeral 23 denotes a pillar, and reference numeral 24 denotes a ceiling. As described above, since the vehicle is a fully autonomous driving vehicle corresponding to level 4 (Lv 4), it is apparently that there is no steering wheel, accelerator pedal, brake pedal or the like.

### <Another Example of Cabin 9>

In Fig. 5, as another example of the cabin 9, the following is provided. That is, a display 25 is provided on the windshield 17. The display 25 displays various information such as travel information (operation information) and information from the outside. The display 25 of the present embodiment can also display videos of a television, a DVD, play of a moving image obtained through the Internet, or the like. The display 25 can be operated not only by a remote controller (not shown) but also by a smart speaker (not shown; a speaker with Al assistant function supporting interactive voice operation). The front panel 20 is provided with a wireless communication device 26. The wireless communication device 26 has a function of "Wi-Fi (registered trademark)". The wireless communication device 26 is provided to allow the user to use a smartphone, a tablet PC, a notebook PC, or the like in the cabin 9. In addition, the wireless communication device 26 is provided to enable connection of a sensor (not shown) installed in the cabin 9.

Reference numeral 27 in the front panel 20 denotes a speaker. Reference numeral 28 denotes a register (air outlet of air conditioner), and reference numeral 29 denotes an AC outlet. The register 28 is also provided on the side glass 18 or the like. The AC outlet 29 is electrically connected to an expansion unit 52 (see Fig. 7) of the connection layer 6 to be described later. In present embodiment, the AC outlet 29 is also provided to the rear panel 22 and the pillar 23 on the rear side (this is an example). Providing of the AC outlet 29 is optional, and only an AC outlet 67 to be described later of the connection layer 6 may be provided. The front panel 20 is provided with a storage portion (not shown) such as a so-called glove box.

A watching unit 30 is provided on the side glass 18 or on the ceiling 24. The watching unit 30 is provided to obtain information on the presence or absence of the user and the safety confirmation of the user (whether the user is in a dangerous state for some reason or whether the user is sick), including the temperature and humidity in the cabin 9. The information obtained through the watching unit 30 is transmitted to the chassis layer 4 or transmitted to the cloud 2 via a signal relay unit 77 (see Fig. 14A) of the connection layer 6 to be described later. Either one of the transmission and reception to and from the cloud 2 or the transmission and reception through the chassis layer 4, and the transmission and reception by the watching unit 30 may be adopted, for example (in the latter case, the communication unit is included in the configuration of the cabin layer 5). The watching unit 30 is, for example, "a device existing as a conductor" or "a device such as a service robot".

In addition to the watching unit 30, the ceiling 24 is also provided with lighting equipment (not shown). Under the side glass 18, for example, a display 31 specialized for SNS (social networking service) is provided. The rear glass 19 is mirrored by a switch operation (the windshield 17 or the side glass 18 may have the same configuration). The front panel 20, the side panel 21 and the rear panel 22 have a changeable portion. The changeable portion is, for example, a portion which can be replaced when it is dirty, a portion such as a decorative board which changes the atmosphere of the interior according to the application, or a portion which is replaced as needed during maintenance. In addition, for applications such as conference rooms and individual learning chores, the changeable portion is a writable white board-like portion. The changeable portion may be all or part of the panel.

### <Floor 14>

In Fig. 5, the floor 14 is formed to be flat as described above. In a case where a person gets on the vehicle, for example, the floor 14 is formed in a manner of spreading a carpet specification mat. When being used as a transport vehicle, the floor 14 is formed in a state where it is safe to load luggage, for example in the form of a pallet. In addition, in a case of being used as a kitchen car, for example, the floor 14 is formed in a state where it is safe to spill water or oil. Further, in a case of being used as a barber or a beauty salon, the floor 14 is formed in a state where it is easy to clean. The floor 14 is formed in a state according to the multi-purpose application. Such a floor 14 has a plurality of AC outlets 67 to be described later. The AC outlet 67 configures an electrical connection unit 51 (see Fig. 7) of the connection layer 6 to be described later, and is a portion which can be changed in disposition, for example, by a slide, according to the application of the cabin layer 5.

In Fig. 5, reference numeral 33 on the floor 14 denotes a structure fixing unit. The structure fixing unit 33 schematically shows a portion for fixing a structure (for example, the four seats 15 of Fig. 4) with "+". The structure fixing unit 33 is a portion configuring the connection layer 6. Under the floor 14, a cabin manager 48 to be described later of the connection layer 6 and a high voltage battery 49 are disposed.

### <Configuration of Chassis Layer 4 (Chassis 8)>

In Fig. 6, reference numeral 34 in the chassis layer 4 (the chassis 8) denotes a chassis body. In addition, reference numeral 35 denotes a wheel, reference numeral 36 denotes an autonomous driving control unit, reference numeral 37 denotes a steering function unit, reference numeral 38 denotes a drive function unit, reference numeral 39 denotes a brake function unit, reference numeral 40 denotes a high voltage main battery (corresponding to the "second high voltage battery" described in the claims), reference numeral 41 denotes a wire harness for high voltage, reference numeral 42 denotes an air conditioning function unit, reference numeral 43 denotes a sensor function unit, reference numeral 44 denotes a radar function unit, reference numeral 45 denotes a dedicated communication device, and reference numeral 46 denotes an accident data recording device. Reference numeral 47 denotes a headlight, and the side on which the headlight is located is referred to as a front side. A known large capacity lithium ion battery is adopted as the high voltage main battery 40. The high voltage main battery 40 can be charged with AC 100 V or AC 200 V. In addition, it is naturally possible to perform rapid charging according to a standard (CHAdeMo (registered trademark)) at least widespread in Japan. A known data communication module (DCM) is adopted as the dedicated communication device 45. Further, a known event data recorder (EDR) is adopted as the accident data recording device 46. The chassis layer 4 includes the above components (the configuration is an example).

### <Configuration of Connection Layer 6 (Plate Module 13)>

Fig. 7 schematically shows the connection layer 6 (plate module 13) superimposed on the chassis layer 4 (the chassis 8) (shown as an embodiment of the present invention). The connection layer 6 includes the cabin manager 48 as an important functional portion. Two cabin managers 48 are provided in the present embodiment.

The above important function of the cabin manager 48 is a function of "changing the distribution of the power supply used in the cabin layer 5 according to the application of the cabin layer 5". The function of the cabin manager 48 is not a function to make the distribution of the power supply constant as in the related art. The function of the cabin manager 48 is a function suitable in a case of adopting the cabin layer 5 (cabin 9) corresponding to a multi-purpose application with the change of mobility services. That is, the function of the cabin manager 48 is different from the cabin manager in the related art in that the distribution of the power supply can be changed based on the kind of application of the cabin layer 5.

According to the cabin manager 48, since the distribution of the power supply can be changed based on the kind of application of the cabin layer 5, for example, the power supply can be changed to a distribution of 40% on a front side and 60% on a rear side of the vehicle based on the kind of application. In addition, the power supply can be changed to a distribution of 100% on the rear side according to another application. Further, the cabin 9 can be monitored sequentially to change the distribution of the power supply according to yet another application. The above shows an example.

The details of the cabin manager 48 will be described later with reference to Fig. 8.

The connection layer 6 includes, in addition to the cabin manager 48, the high voltage battery 49, an inverter 50 (see Fig. 8), the electrical connection unit 51, the expansion unit 52, and a second electrical connection unit 53. The high voltage battery 49 is a power supply for supplying power to the cabin layer 5, and a known high capacity lithium ion battery (400 V) is adopted. In the present embodiment, the high voltage battery 49 is to be an extended power supply for the high voltage main battery 40 (see Fig. 6) of the chassis layer 4. In the present embodiment, the high voltage battery 49 is connected to the cabin manager 48 disposed on the rear side. The high voltage battery 49 is provided with a charging unit 54. The connection layer 6 can be charged independently by providing the high voltage battery 49 with the charging unit 54 (the charging method is similar to that of the high voltage main battery 40 of the chassis layer 4).

The details of the inverter 50 will be described later with reference to Fig. 8. The details of the electrical connection unit 51 will be described later with reference to Fig. 7 to Fig. 12.

The expansion unit 52 is provided as a portion used in an expanded manner to connect the cabin layer 5. Specifically, in a case where the cabin layer 5 is provided with the AC outlet 29 (see Fig. 5), the expansion unit 52 is provided as a portion which can be connected to the AC outlet 29. In addition, if the cabin layer 5 needs to be supplied with a DC power supply, the expansion unit 52 is provided as a portion for this DC power supply. The second electrical connection unit 53 is provided as an electrical connection portion with the high voltage main battery 40 (see Fig. 6) of the chassis layer 4. In the present embodiment, the second electrical connection unit 53 is connected to the cabin manager 48 disposed on the front side. In the present embodiment, the cabin managers 48 disposed on the front side and the rear side are electrically connected by a connection line 32.

### <Cabin Manager 48>

In Fig. 8, the cabin manager 48 has a function capable of changing the distribution of the power supply (the high voltage battery 49 (if necessary, also the high voltage main battery 40 of the chassis layer 4)) used in the cabin layer 5 (see Figs. 2A to Fig. 5) based on the kind of application of the cabin layer 5. The cabin manager 48 as such a functional portion includes a cabin controller 55 (corresponding to the "controller" described in the claims). In addition, the cabin manager 48 includes, in addition to the cabin controller 55, a connector unit 56, a step-down DC-DC 57, and the inverter 50.

The cabin controller 55 includes, although not shown particularly, a functional portion of a so-called microcomputer including a control unit, an arithmetic processing unit, a storage unit, or the like. The cabin controller 55 is used as an execution portion of a processing program which changes the distribution of the power supply based on the kind of application of the cabin layer 5 (see Figs. 2A to Fig. 5) (used as a portion to perform processing based on the "power distribution method" described in the claims). In addition, the cabin controller 55 includes a monitoring unit 58. The monitoring unit 58 is used as a portion which monitors the capacity state of the high voltage battery 49. The monitoring unit 58 in the present embodiment also monitors the capacity state of the high voltage main battery 40 of the chassis layer 4 (monitoring is optional). Since the cabin manager 48 includes the cabin controller 55 including the monitoring unit 58, the cabin manager 48 also has a function as a power management device.

The process related to determination performed by the cabin controller 55 is based on data information stored in advance in the storage unit or data information from the monitoring unit 58. In addition, the process is also based on data information from the chassis layer 4 and/or the cabin layer 5, or data information from the cloud 2 (see Fig. 1).

The connector unit 56 is configured to be an electrical connection portion with the high voltage battery 49 (the high voltage main battery 40 (see Fig. 11) of the chassis layer 4). The connector unit 56 is connected to the cabin controller 55 via an electric wire 59. In addition, the connector unit 56 is connected to the step-down DC-DC 57 via electric wires 60, 61. The step-down DC-DC 57 converts a DC (direct current) power supply into a DC (direct current) power supply, and here, a step-down converter which steps down DC 400 V to 48 V is adopted. Such a step-down DC-DC 57 is connected to the inverter 50 via an electric wire 62. The inverter 50 converts a DC (direct current) power supply to an AC (AC) power supply, and is provided to supply an AC (alternating current) power supply to the cabin layer 5 (see Figs. 2A to Fig. 5). The inverter 50 is connected to the cabin controller 55 via an electric wire 63. In addition, the inverter 50 is connected to the electrical connection unit 51 via an electric wire 64. In the present embodiment, seven inverters 50 and seven step-down DC-DCs 57 are provided, such that the power supply can be distributed to at most seven systems (the number is an example).

As described above, the cabin manager 48 (cabin controller 55) is configured to be able to change the distribution of the power supply for at most seven systems based on the kind of application of the cabin layer 5 (see Figs. 2A to Fig. 5).

The cabin manager 48 of the present embodiment includes the inverter 50 and the step-down DC-DC 57. However, the cabin manager 48 may be configured separately from the inverter 50 and the step-down DC-DC 57. In addition, the cabin manager 48 having a configuration in which the inverter 50 and the step-down DC-DC 57 are integrated as in the present embodiment may be referred to as a "cabin manager ECU" or a "cabin manager unit".

### <Electrical Connection Unit 51 >

In Fig. 7 to Fig. 12, the electrical connection unit 51 is a portion connected to the electric wire 64 from the cabin manager 48 and is configured to be able to perform electrical connection with the cabin layer 5. Specifically, the electrical connection unit 51 includes a power distribution spool 65 connected to the electric wire 64, an electric wire 66, and the AC outlet 67. The electric wire 66 is provided to be drawn and unwound from the power distribution spool 65. The AC outlet 67 is provided on an end of the electric wire 66. The power distribution spool 65 is used when changing the electrical connection position of the AC outlet 67. The power distribution spool 65 is fixed to a predetermined position of the connection layer 6 (plate module 13) by an appropriate manner.

When changing the electrical connection position of the AC outlet 67, the connection layer 6 (plate module 13) is provided with a customization region 68. The customization region 68 is set to be a region where the AC power supply distributed based on the kind of application of the cabin layer 5 can be electrically connected to the cabin layer 5 at an optimum position. The customization region 68 of the present embodiment corresponds to a region which is substantially the entire floor 14. Reference numeral 69 in Fig. 5, Fig. 9, and Fig. 11 denotes a slide portion. The slide portion 69 is formed as a portion used when changing the connection position of the AC outlet 67. In present embodiment, the AC outlet 67 is guided to the slide portion 69, so that the connection position can be changed. The change of the connection position is effective to allow the electrical connection with the cabin layer 5 at a degree of freedom.

In Fig. 7, reference numeral 70 in the electrical connection unit 51 denotes a power supply hub. The power supply hub 70 is provided in a case where there are a plurality of AC outlets 67 and among them a priority is desired.

In Fig. 10 and Fig. 12, the connection layer 6 (plate module 13) is provided with a top plate portion 71 configuring the floor 14 and a bottom plate portion 72 disposed at a predetermined distance from the top plate portion 71. The top plate portion 71 and/or the bottom plate portion 72 have a function as a shield unit as a noise countermeasure, a function as a waterproof unit as a water countermeasure, and a function as a heat-resistant unit as a heat countermeasure. In the case of the shield unit, the noise countermeasure can be achieved, in the case of the waterproof unit, the water countermeasure can be achieved, and in the case of the heat-resistant unit, the heat countermeasure can be achieved. In addition, the top plate portion 71 and the bottom plate portion 72 have a structure capable of ensuring sufficient rigidity. It is apparently that weight reduction can be achieved when, for example, aluminum is adopted as the material of the top plate portion 71 and the bottom plate portion 72.

### <Other Examples of Electrical Connection Portion>

In Figs. 13A to 13C, as other examples of the electrical connection portion (a portion replacing the AC outlet 67 in Fig. 5 and Fig. 7), the following may be adopted. That is, a retractable AC outlet 73 as shown in Fig. 13A is adopted. The AC outlet 73 is disposed at a predetermined position on the floor 14 or can be changed in position by a slide (not shown) or the like. In addition, an AC outlet 74 as shown in Fig. 13B is adopted. The AC outlet 74 can be turned in the direction of the arrow to change the orientation thereof. Fig. 13C shows a wireless power feeding type. A power feeding side coil unit 75 is provided below the floor 14. Reference numeral 76 denotes a power receiving side coil portion on a cabin layer 5 side.

### <Another Example of Multi-purpose Autonomous Driving Vehicle 1>

In Fig. 14A, to supplementally illustrate the multi-purpose autonomous driving vehicle 1, the connection layer 6 is provided with a signal relay unit 77 configured to relay signals between the chassis layer 4 and the cabin layer 5. In the present embodiment, the signal relay unit 77 is connected to the cabin manager 48 (see Fig. 7 and Fig. 8) (this is an example). Although not shown particularly, well-known CAN communication or the like is adopted for communication with a device mounted on the multi-purpose autonomous driving vehicle 1. In addition, as shown in Fig. 14B, the connection layer 6 may be integrated with the cabin layer 5. Further, as shown in Fig. 14C, the connection layer 6 may be integrated with the chassis layer 4.

### <Effect of Embodiment of the Present Invention>

As described above with reference to Fig. 1 to Fig. 14C, according to the embodiment of the present invention, the effect of being able to adopt the cabin 9 corresponding to a multi-purpose application is obtained.

It is apparent that various modifications can be made to the present invention without changing the purpose of the present invention.

## Claims

1. A connection layer system comprising:
a cabin manager disposed between a chassis layer and a cabin layer,
wherein the chassis layer has a function for traveling;
wherein the cabin layer functions as a cabin on an upper side of the chassis layer; and
wherein the cabin manager includes a controller configured to change distribution of a power supply used in the cabin layer based on a kind of application of the cabin layer.

2. The connection layer system according to claim 1, further comprising:
a first electrical connection unit connected to the cabin manager and configured to perform electrical connection with the cabin layer.

3. The connection layer system according to claim 2, further comprising:
a customization region configured to change an arrangement of the first electrical connection unit based on the kind of application of the cabin layer.

4. The connection layer system according to claim 2 or 3,
wherein the first electrical connection unit includes an AC outlet.

5. The connection layer system according to any one of claims 2 to 4, further comprising:
a first high voltage battery serving as the power supply; and
an inverter connected to the first high voltage battery.

6. The connection layer system according to claim 5,
wherein the cabin manager includes a monitoring unit configured to monitor a capacity state of the first high voltage battery.

7. The connection layer system according to claim 5 or 6, further comprising:
a charging unit configured to charge the first high voltage battery.

8. The connection layer system according to any one of claims 2 to 4, further comprising:
a second electrical connection unit configured to perform electrical connection; and
an inverter connected to the second electrical connection unit,
wherein the second electrical connection unit is connected to a second high voltage battery provided on the chassis layer and serving as another power supply.

9. The connection layer system according to any one of claims 2 to 4, further comprising:
a second electrical connection unit configured to perform electrical connection;
a first high voltage battery serving as the power supply; and
an inverter configured to connect the second electrical connection unit and the first high voltage battery,
wherein the second electrical connection unit is connected to a second high voltage battery provided on the chassis layer and serving as another power supply.

10. The connection layer system according to any one of claims 1 to 9, further comprising:
a signal relay unit configured to perform signal relay between the chassis layer and the cabin layer.

11. The connection layer system according to any one of claims 1 to 10, further comprising:
at least one of a shield unit as a noise countermeasure disposed between the chassis layer and the cabin layer, a waterproof unit as a water countermeasure disposed between the chassis layer and the cabin layer, a heat-resistant unit as a heat countermeasure disposed between the chassis layer and the cabin layer, and a structure fixing unit capable of fixing a structure used in the cabin layer.

12. A multi-purpose autonomous driving vehicle, comprising:
a chassis layer having a function for traveling;
a cabin layer functioning as a cabin on an upper side of the chassis layer; and
a connection layer disposed between the chassis layer and the cabin layer,
wherein the connection layer system according to any one of claims 1 to 11 is adopted as a system in the connection layer.

13. The multi-purpose autonomous driving vehicle according to claim 12,
wherein the connection layer is separate from the chassis layer and the cabin layer.

14. The multi-purpose autonomous driving vehicle according to claim 12,
wherein the connection layer is integrated with either one of the chassis layer and the cabin layer.

15. A cabin manager comprising:
a controller configured to change distribution of a power supply used in a cabin layer based on a type of application of the cabin layer,
wherein the controller is disposed on a connection layer provided between a chassis layer having a function for traveling and the cabin layer functioning as a cabin on an upper side of the chassis layer.

16. A power distribution method in a connection layer system, wherein the connection layer system includes a cabin manager disposed on a connection layer disposed between a chassis layer having a function for traveling and a cabin layer functioning as a cabin on an upper side of the chassis layer, and the cabin manager includes a controller configured to distribute a power supply used in the cabin layer, the power distribution method comprising:
performing a process of changing distribution of the power supply by the controller based on a kind of application of the cabin layer.
